(19) Europäisches Patentamt
European Patent Office
Office européen des brevets

(11) **EP 2 047 585 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **07819914.8**

(22) Anmeldetag: **26.07.2007**

(51) Int Cl.:
*H02K 29/12* *(2006.01)*        *H02K 11/00* *(2006.01)*
*H02P 6/18* *(2006.01)*

(86) Internationale Anmeldenummer:
**PCT/EP2007/057723**

(87) Internationale Veröffentlichungsnummer:
**WO 2008/015157 (07.02.2008 Gazette 2008/06)**

(54) **SYNCHRONMOTOR, GEBERLOSES MOTORSYSTEM, SOWIE EIN VERFAHREN ZUM BETREIBEN EINES GEBERLOSEN MOTORSYSTEMS MIT EINEM SYNCHRONMOTOR**

SYNCHRONOUS MOTOR, ENCODERLESS MOTOR SYSTEM AND A METHOD FOR OPERATING AN ENCODERLESS MOTOR SYSTEM WITH A SYNCHRONOUS MOTOR

MOTEUR SYNCHRONE, SYSTÈME DE MOTEUR SANS CODEUR ET PROCÉDÉ DE FONCTIONNEMENT D'UN SYSTÈME DE MOTEUR SANS CODEUR AVEC UN MOTEUR SYNCHRONE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.08.2006 DE 102006036288**

(43) Veröffentlichungstag der Anmeldung:
**15.04.2009 Patentblatt 2009/16**

(73) Patentinhaber: **Siemens Aktiengesellschaft 80333 München (DE)**

(72) Erfinder:
• **STOIBER, Dietmar 90763 Fürth (DE)**
• **WEDEL, Bernd 91096 Möhrendorf (DE)**

(56) Entgegenhaltungen:
**EP-A- 0 457 389        DE-A1- 10 156 243
DE-A1- 10 220 164**

**Beschreibung**

Die Erfindung betrifft einen Synchronmotor, insbesondere einen geberlosen Synchronmotor. Die Erfindung betrifft weiterhin ein geberloses Motorsystem mit einem solchen Synchronmotor, sowie ein Verfahren zum Betreiben des geberlosen Motor-systems.

Üblicherweise weist ein Synchronmotor eine Anzahl von Statorspulen auf, die in der Nähe eines Läufers mit mindestens einem Permanentmagneten angeordnet sind, um den Läufer anzutreiben. Der Läufer ist üblicherweise in Form eines Rotors ausgebildet, wobei der Permanentmagnet so an dem Rotor angeordnet ist, dass dieser ein Läufer-Magnetfeld in radialer Richtung zu einer Rotorachse des Rotors bewirkt. Der Läufer des Synchronmotors wird angetrieben, indem an jede der Statorspulen mit Hilfe von entsprechenden Ansteuersignalen ein entsprechender Statorstrom angelegt wird, so dass ein resultierendes Antriebsmagnetfeld bewirkt wird. Die Statorströme werden so gesteuert, dass das Antriebsmagnetfeld im Wesentlichen senkrecht zur Richtung des durch den Permanentmagneten bewirkten Läufer-Magnetfeldes verläuft, um ein größtmögliches Drehmoment zu bewirken. Um die Statorströme stets so anzulegen, dass die Richtung des von den Statorspulen bewirkten Magnetfeldes senkrecht zum Läufermagnetfeld verläuft, muss die Position des Läufers bzw. die Rotorlage bekannt sein. Die Position des Läufers ist also zum Betrieb des Synchronmotors ständig zu ermitteln bzw. zu schätzen, so dass die Statorspulen abhängig von der bestimmten Position des Läufers optimal angesteuert werden können. Zum Bestimmen der Position des Läufers bzw. der Rotorlage sind üblicherweise Positionsdetektoren vorgesehen.

Bei einem geberlosen Synchronmotor wird die Position des Rotors mit Hilfe einer Anisotropie einer resultierenden Induktivität in den Statorspulen des Stators geschätzt, d.h. beim Betrieb des Synchronmotors können abhängig von der Rotorlage in den Statorspulen verschiedene resultierende Induktivitäten gemessen werden, über die sich die Position des Läufers bzw. des Rotors schätzen lässt. Dazu werden dem Ansteuersignal zum Anlegen der Statorströme für die Statorspulen Messsignale so überlagert, das zusätzlich zum Antriebs-Magnetfeld ein Wechsel-Magnetfeld erzeugt wird, wobei die durch die Messsignale hervorgerufenen Stromflusse durch die Statorspulen von der rotorlageabhängigen resultierenden Induktivität des Synchronmotors abhängt. Da die resultierende Induktivität des Synchronmotors wie zuvor beschrieben von der Position des Rotors abhängt, kann über die Messströme, die durch die Messsignale hervorgerufen werden, die Rotorlage abgeschätzt werden.

Um die Rotorlage möglichst genau zu ermitteln, ist es notwendig, dass der Verlauf der resultierenden Induktivität des Synchronmotors sich möglichst stark abhängig von der Rotorlage ändert, d.h. anisotrop ist, wobei zwischen einer Richtung des Läufer-Magnetfeldes und einer dazu verschiedenen Richtung ein möglichst großer Unterschied der resultierenden Induktivität vorliegt. Bei herkömmlichen Rotoren führt die geringe Anisotropie der resultierenden Induktivität jedoch dazu, dass die Rotorlage nur ungenau geschätzt wird, so dass das Antriebsmagnetfeld nicht exakt senkrecht zum Läufer-Magnetfeld verläuft. Dadurch kann der Synchronmotor nicht mit dem optimalen Drehmoment betrieben werden.

Aus EP 0 457 389 A1 ist Motor mit gegeneinander beweglichem ersten Motorteil und zweiten Motorteil bekannt. Das erste Motorteil umfasst Anregungsspulen zum Antrieb des zweiten Motorteils. Das zweite Motorteil umfasst eine magnetische Schaltung, um ein magnetisches Feld zu erzeugen, das über eine kurzgeschlossene Wicklung an dem ersten Motorteil detektierbar ist. Der Grad der magnetischen Kopplung in die Wicklung des ersten Motorteils hängt von der relativen Position des ersten Motorteils bezüglich des zweiten Motorteils ab.

Aus DE 101 56 243 A1 ist ein elektronisch kommutierter Motor bekannt. Es ist weiterhin offenbart, dass eine Resonanzfrequenz eines Schwingkreises zur Lagemessung an einer rotierenden Maschine verwendet werden kann.

Es ist Aufgabe der vorliegenden Erfindung einen Synchronmotor zur Verfügung zu stellen, dessen Anisotropie bzgl. des von der Richtung des Läufermagnetfeldes abhängigen Verlaufs der resultierenden Induktivität in den Statorspulen eine ausreichende Genauigkeit der Schätzung der Position des Läufers zulässt. Es ist weiterhin Aufgabe der vorliegenden Erfindung, ein geberloses Motorsystem mit einem Synchronmotor sowie ein Verfahren zum Betreiben eines solchen geberlosen Motorsystems zur Verfügung zu stellen, bei denen die Position des Läufers möglichst genau schätzbar ist.

Diese Aufgaben werden durch den Synchronmotor nach Anspruch 1, durch das geberlose Motorsystem nach Anspruch 6 sowie durch das Verfahren zum Betreiben eines geberlosen Motorsystems nach Anspruch 10 gelöst.

Weitere vorteilhafte Ausgestaltungen der Erfindung sind in den abhängigen Ansprüchen angegeben.

Gemäß einem ersten Aspekt der vorliegenden Erfindung ist ein Synchronmotor vorgesehen, der eine Anzahl von Statorspulen und einen Läufer mit mindestens einem Permanentmagneten umfasst, der ein Magnetfeld in einer Hauptflussrichtung bewirkt. An dem Läufer ist mindestens eine Spulenwicklung angebracht, um durch ein mit Hilfe der Statorspulen angelegtes Wechsel-Magnetfeld in Richtung einer Wicklungsachse der Spulenwicklung ein resultierendes Magnetfeld zu induzieren, so dass eine resultierende Induktivität der Statorspulen bezüglich der Richtung der Wicklungsachse bei unterschiedlichen Lagen des Läufers verschieden ist.

Erfindungsgemäß ist an dem Läufer eine Kapazität vorgesehen, die mit der Spulenwicklung in Reihe geschaltet ist, um einen Sperrkreis mit einer vorbestimmten Eigenfrequenz zu bilden. Der Sperrkreis erhöht die Impedanz in Hauptflussrichtung insbesondere für ein Wechsel-Magnetfeld mit einer Frequenz nahe der vorbestimmten Eigenfrequenz, so dass die resultierende Induktivität in der Hauptflussrichtung verändert wird und dadurch die Anisotropie des Verlaufs der resultierenden Induktivität der Statorspulen erhöht werden kann.

Durch das Vorsehen der Spulenwicklung an dem Läufer wird die Anisotropie des von der Lage des Läufers abhängigen Verlaufs der resultierenden Induktivität in den Statorspulen verstärkt. Die zusätzliche Spulenwicklung an dem Läufer führt dazu, dass die resultierende Induktivität in den Statorspulen bezüglich der Richtung einer Wicklungsachse der Spulenwicklung deutlich gegenüber davon verschiedenen Richtungen verringert wird.

Die resultierende Induktivität der Statorspulen bezüglich einer bestimmten Richtung kann man ermitteln, indem die Messsignale so an die Statorspulen angelegt werden, dass das Wechsel-Magnetfeld in der bestimmten Richtung anliegt. Die Messsignale führen zu zugeordneten Stromflüssen durch die Statorspulen, der von der resultierenden Induktivität abhängt. Führen die Messsignale also zu einem Wechsel-Magnetfeld in Richtung der Wicklungsachse der Spulenwicklung, so fließen durch die Statorspulen jeweils den Messsignalen zugeordnete Messströme, die insgesamt größer sind als die Ströme, die die Messsignale hervorrufen würden, wenn sie das Wechsel-Magnetfeld in einer davon verschiedenen Richtung erzeugen würden.

Die Spulenwicklung kann kurzgeschlossen sein (Beispiel, nicht Teil der beanspruchten Erfindung). Dadurch kann erreicht werden, dass das durch die Statorspulen erzeugte Wechsel-Magnetfeld, das in Richtung der Wicklungsachse der Spulenwicklung verläuft, über den darin induzierten Strom ein dem Wechsel-Magnetfeld entgegen gesetztes Magnetfeld bewirkt, das möglichst stark ist, um die resultierende Induktivität in Richtung der Wicklungsachse der Spulenwicklung deutlich zu verringern.

Durch den Permanentmagneten des Läufers kann die Hauptflussrichtung und eine davon verschiedene Nebenflussrichtung des magnetischen Feldes bestimmt sein, wobei die Spulenwicklung so an dem Läufer angeordnet ist, dass die resultierenden Induktivitäten der Statorspulen bzgl. der Hauptflussrichtung minimal und bzgl. der Nebenflussrichtung maximal sind (Beispiel, nicht Teil der beanspruchten Erfindung). Auf diese Weise kann die Lage des Läufers durch Detektieren der minimalen bzw. maximalen Induktivität geschätzt werden.

Gemäß einer bevorzugten Ausführungsform verläuft die Wicklungsachse der Spulenwicklung an dem Läufer parallel zur Hauptflussrichtung.

Weiterhin kann der Läufer als ein Rotor ausgebildet sein, wobei der mindestens eine Permanentmagnet das Läufer-Magnetfeld in radialer Richtung zu einer der Rotorachse bewirkt. Insbesondere können sich die Pole des mindestens Einpermanentmagneten bzgl. einer Rotationsachse des Rotors gegenüberliegen.

Ferner kann zum Abgleichen des Sperrkreises in Reihe zu der Spulenwicklung und der Kapazität ein Widerstand angeordnet sein.

Gemäß einem weiteren Aspekt der vorliegenden Erfindung ist ein geberloses Motorsystem vorgesehen, das einen oben beschriebenen Synchronmotor aufweist. Das Motorsystem weist weiterhin eine Steuereinheit zum Ansteuern der Statorspulen mit einem Antriebsstrom auf, so dass abhängig von einer Lage des Läufers ein Antriebs-Magnetfeld bewirkt wird, das in einer zur Hauptflussrichtung verschiedenen Richtung ausgebildet ist, wobei die Steuereinheit eine Lagedetektoreinheit aufweist, um mit Hilfe von Messsignalen die Lage des Läufers anhand einer durch die Spulenwicklung bewirkten Anisotropie einer resultierenden Induktivität der Statorspulen zu ermitteln.

Die Lagedetektoreinheit kann vorgesehen sein, um den Antriebsströmen Messsignale zu überlagern, die das Wechsel-Magnetfeld bewirken, und um anhand von der resultierenden Induktivität abhängigen Messströmen, die durch die Messsignale hervorgerufen werden, die Lage des Läufers zu ermitteln. Insbesondere kann die Lagedetektoreinheit ausgebildet sein, um die Richtung des mit Hilfe der Messsignale bewirkten Wechsel-magnetfeldes zu regeln, so dass die resultierende Induktivität der Statorspulen entweder maximal oder minimal ist, wobei die Lage des Läufers abhängig von der Richtung des durch die Messsignale bewirkten Wechsel-Magnetfeldes ermittelbar ist.

Gemäß einer Ausführungsform der Erfindung ist durch den Permanentmagneten des Läufers die Hauptflussrichtung und eine davon verschiedene Nebenflussrichtung des Läufer-Magnetfeldes bestimmt, wobei die Spulenwicklung so an den Läufer angeordnet ist, dass die resultierenden Induktivitäten der Statorspulen bzgl. der Hauptflussrichtung minimal und bzgl. der Nebenflussrichtung maximal sind, wobei die Lagedetektoreinheit ausgebildet ist, um das Wechselmagnetfeld in Richtung der Hauptflussrichtung zu regeln (Beispiel, nicht Teil der beanspruchten Erfindung).

Gemäß einer weiteren Ausführungsform der Erfindung ist ein Motorsystem vorgesehen, wobei an dem Läufer eine Kapazität vorgesehen ist, der mit der Spulenwicklung in Reihe geschaltet ist, um einen Sperrkreis mit einer vorbestimmten Eigenfrequenz zu bilden, wobei die Spulenwicklung so an dem Läufer angeordnet ist, dass die resultierenden Induktivität der Statorspulen bezüglich der Hauptflussrichtung maximal und bezüglich der Nebenflussrichtung minimal sind, wobei die Lagedetektoreinheit ausgebildet ist, um das Wechsel-Magnetfeld in Richtung der Hauptflussrichtung zu regeln.

Vorzugsweise ist in Reihe zu der Spulenwicklung und der Kapazität ein Widerstand angeordnet.

Gemäß einem weiteren Aspekt der vorliegenden Erfindung ist ein Verfahren zum Betreiben eines geberlosen Motorsystems mit einem der oben beschriebenen Synchronmotoren vorgesehen. Der Synchronmotor wird abhängig von einer Lage des Läufers betrieben, wobei die Lage des Läufers anhand einer durch die Spulenwicklung an dem Läufer bewirkten Anisotropie der resultierenden Induktivität in den Statorspulen bestimmt wird. Erfindungsgemäß ist vorgesehen, dass durch den Permanentmagneten des Läufers die Hauptflussrichtung und eine davon verschiedene Nebenflussrichtung des Läufer-Magnetfeldes bestimmt ist, wobei die Spulenwicklung mit einer Kapazität in Reihe geschaltet ist, um einen Sperrkreis mit einer Eigenfrequenz zu bilden, und so an dem Läufer angeordnet ist, dass die resultierende Induktivität in den Statorspulen bezüglich der Hauptflussrichtung maximal und bezüglich der Nebenflussrichtung minimal ist, wobei das Wechsel-Magnetfeld mit der Eigenfrequenz des Sperrkreises erzeugt wird und in Richtung der Hauptflussrichtung geregelt wird.

Weiterhin kann eine Richtung des mit Hilfe von Messsignalen durch die Statorspulen bewirkten Wechsel-Magnetfeldes geregelt werden, so dass die resultierende Induktivität in den Statorspulen bezüglich der Richtung des Wechsel-Magnetfeldes entweder maximal oder minimal ist.

Vorzugsweise wird die Lage des Läufers anhand der Richtung, auf die das durch die Messsignale bewirkte Wechsel-Magnetfeld geregelt wird, ermittelt.

Weiterhin kann vorgesehen sein, dass durch den Permanentmagneten des Läufers die Hauptflussrichtung und eine davon verschiedene Nebenflussrichtung des Läufer-Magnetfeldes bestimmt ist, wobei die Spulenwicklung so an dem Läufer angeordnet ist, dass die resultierende Induktivität der Statorspulen bezüglich der Hauptflussrichtung minimal und bezüglich der Nebenflussrichtung maximal sind, wobei das Wechsel-Magnetfeld in Richtung der Hauptflussrichtung geregelt wird (Beispiel, nicht Teil der beanspruchten Erfindung).

Bevorzugte Ausführungsformen der Erfindung werden nachfolgend anhand der beigefügten Zeichnungen näher erläutert. Es zeigen:

　　　　FIG 1 eine schematische Darstellung eines geberlosen Motorsystems mit einem Synchronmotor gemäß einer ersten Ausführungsform der Erfindung (Beispiel, nicht Teil der beanspruchten Erfindung);

　　　　FIG 2 ein Schaltbild eines Sperrkreises, der läuferseitig gemäß einer weiteren Ausführungsform angeordnet ist; und

　　　　FIG 3 ein Bode-Diagramm zur Darstellung des sekundärseitigen Impedanzverlauf bei Verwendung eines Sperrkreises gemäß FIG 2.

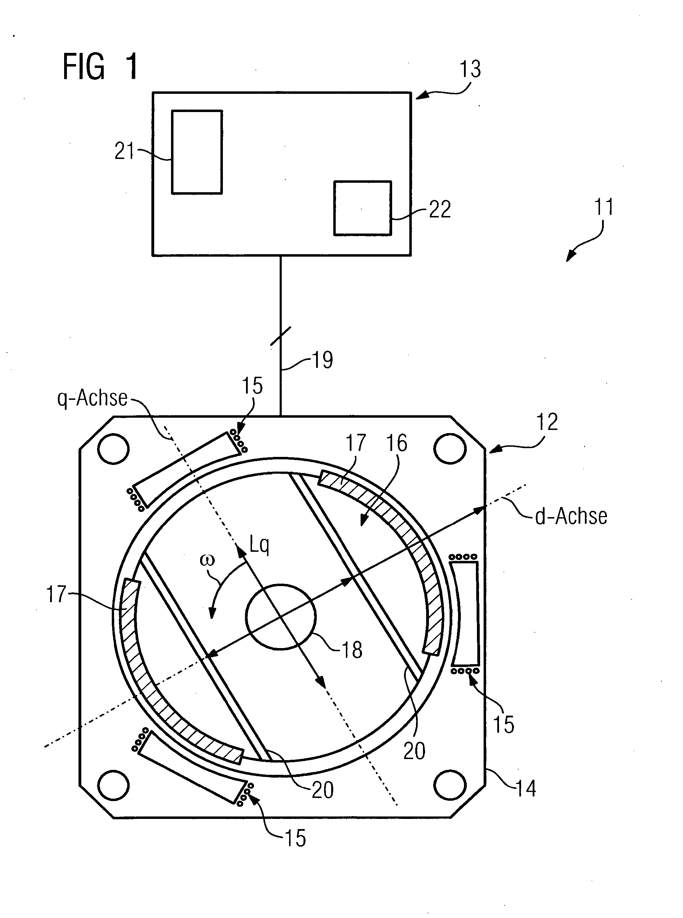

FIG 1. zeigt eine schematische Darstellung eines geberlosen Motorsystems 11 mit einem Synchronmotor 12 und einer Steuereinheit 13 zum Betreiben des Synchronmotors 12. Der Synchronmotor 12 weist ein Gehäuse 14 auf, in dem drei Statorspulen 15 angeordnet sind.

Im Innern des Gehäuses 14 ist ein Rotor 16 angeordnet, der drehbar an der Rotorachse 18 angeordnet ist. Der Rotor 16 weist zwei Permanentmagnete 17 auf, die an radial bezüglich einer Rotorachse 18 gegenüberliegenden Seiten des Rotors 16 angeordnet sind, so dass ein magnetischer Hauptfluss in Richtung einer d-Achse des durch die Permanentmagneten 17 hervorgerufenen Läufer-Magnetfeldes bewirkt wird. Die Permanentmagneten 17 sind vorzugsweise als Schalenmagnete ausgebildet, die entlang eines Umfangrandes des zylinderförmigen Rotors 16 angeordnet sind. Die Polbedeckung der Permanentmagnete 17 liegt üblicherweise in einer Größenordnung von unter 100% z.B. bei 80%.

Bezüglich der Rotorachse 18 sind die Statorspulen 15 um jeweils 120° zueinander versetzt angeordnet. Die Anzahl der Statorspulen ist im Wesentlichen beliebig wählbar, sie muss jedoch mindestens zwei betragen. Jede der Statorspulen 15 kann auch als Spulenpaar vorgesehen sein, deren Teilspulen einander bzgl. der Rotorachse 18 gegenüberliegen und die miteinander in Reihe und bezüglich ihrer Wicklungsrichtungen gleichgerichtet verschaltet sind.

Die Statorspulen 15 werden über entsprechende Ansteuerleitungen 19 von der Steuereinheit 13 mit Antriebssignalen angesteuert, um den Rotor 16 anzutreiben. Dazu wird mit Hilfe der Statorspulen 15 ein Magnetfeld an dem Rotor 16 erzeugt, das senkrecht zur d-Achse in Richtung einer q-Achse verläuft. Dazu werden die Statorspulen 15 so angesteuert, dass ein resultierendes Antriebs-Magnetfeld in Richtung der q-Achse erzeugt wird. Die Statorspulen 15 werden üblicherweise mit Antriebssignalen, insbesondere in Form von Spannungspulsen, angesteuert, die im gezeigten Ausführungsbeispiel zueinander drei um 120°-phasenverschobene sinusförmige Statorströme in den Statorspulen 15 hervorrufen, eine konstante Drehgeschwindigkeit des Rotors 16 vorausgesetzt.

Damit es möglich ist, dass das angelegte Antriebs-Magnetfeld stets senkrecht zur Richtung des durch die Permanentmagneten bewirkten Läufer-Magnetfeld verläuft, ist es notwendig, die Rotorlage zu bestimmen bzw. abzuschätzen. Bei einem geberlosen Motorsystem wird die Rotorlage jedoch nicht direkt mit Hilfe von geeigneten Sensoren ermittelt, sondern es wird eine durch die Rotorlage hervorgerufene Anisotropie der resultierenden Induktivitäten in den Statorspulen verwendet, um die Rotorlage zu bestimmen. Die Genauigkeit der Lageschätzung hängt in entscheidendem Maße davon ab, wie stark die Schwankungen der rotorlageabhängigen resultierenden Induktivitäten in den Statorspulen sind.

Um die resultierenden Induktivitäten zu ermitteln, werden die Statorspulen 15 zusätzlich zu den entsprechenden Antriebssignalen (Statorströmen) auch mit jeweiligen Messsignalen beaufschlagt, die so geregelt werden, dass ein Wechsel-Magnetfeld in Richtung der d-Achse des Rotors 16 durch die Statorspulen angelegt wird. Das Anlegen solcher entsprechender Messsignale hat keinen Einfluss auf das Betriebsverhalten des Synchronmotors, da zum Antreiben des Rotors 16 lediglich die Komponente des durch die Statorspulen 15 bewirkten Magnetfelds in Richtung der q-Achse wesentlich ist. Die Messsignale sind vorzugsweise gepulste Spannungssignale mit einer vorbestimmten Frequenz, z.B. 1kHz oder mehr, so dass sinusförmige Stromverläufe der resultierenden Messströme in den Statorspulen 15 abhängig von der in den Statorspulen wirkenden Induktivität die Folge sind.

Es wird vorgeschlagen, den Rotor 16 mit einer, zwei oder mehreren Spulenwicklungen 20 zu versehen, deren Wicklungsachsen gleichgerichtet sind. Vorzugsweise sind die Spulenwicklungen 20 so ausgerichtet, dass deren Wicklungsachsen im Wesentlichen parallel zur Hauptflussrichtung verlaufen, d.h. in Richtung des durch die Lage der Permanentmagneten 17 bestimmten Läufer-Magnetfeldes, d.h. in Richtung der d-Achse. Die Spulenwicklungen 20 sind beispielsweise so an dem Rotor 16 angeordnet, dass sie um durch die als Schalenmagnete ausgebildeten Permanentmagnete 17 definierte Zylindersegmente des Rotors 16 verlaufen. Alternativ kann die Spulenwicklung 20 auch mittig zwischen zwei Spulenwicklungen 20 um die Rotorachse 18 vorgesehen sein. Die Anzahl der Windungen der Spulenwicklung(en) 20 bestimmt im Wesentlichen das Maß der Anisotropie der resultierenden Induktivität in Richtung der d-Achse.

Die Spulenwicklung 20 ist bei dieser Ausführungsform vorzugsweise kurzgeschlossen, so dass ein durch die entsprechenden Messsignale, die in Richtung der d-Achse ein Wechsel-Magnetfeld hervorrufen, ein Strom in der Spulenwicklung 20 induziert wird, der ein dem Wechsel-Magnetfeld entgegen gesetztes Magnetfeld bewirkt. Dieses resultierende Magnetfeld führt zu einer erheblichen Abschwächung des die Messsignale betreffenden resultierenden Induktivität $L_d$ in Richtung der d-Achse. Da die Wicklungsachse der Spulenwicklung 20 senkrecht zur q-Achse verlaufen, wird dagegen die resultierende Induktivität $L_q$ in Richtung der q-Achse nicht oder nicht wesentlich beeinflusst.

Die resultierende Induktivität ist eine Rechengröße, die sich aus den Induktivitäten der Statorspulen 15 errechnen lässt, insbesondere bezüglich der Richtungen der d-Achse und der q-Achse. Die Spulenwicklungen 20 bewirken bei der o.a. Anordnung eine Reduzierung der resultierenden Induktivität in Richtung der d-Achse, da der in den Spulenwicklung 20 induzierte Strom dem Wechsel-Magnetfeld, das durch die Messsignale in den Statorspulen 15 hervorgerufen wird, entgegenwirkt. Dadurch bewirken die Messsignale (üblicherweise ein Spannungssignal), wenn sie ein Magnetfeld in Richtung der d-Achse (d.h. in Richtung der Wicklungsachse der Spulenwicklungen 20) hervorrufen, einen höheren zugeordneten Stromfluss in den Statorspulen 15 als dies vergleichbare Messsignale bewirken würden, die ein Wechsel-Magnetfeld in Richtung der q-Achse (d.h. in einer von der Wicklungsachse der Spulenwicklungen 20 verschiedenen Richtung) hervorrufen würde. Um den zugeordneten Stromfluss durch die Statorspulen zu bestimmen, wenn zusätzlich auch Antriebsströme durch die Statorspulen 15 fließen, können die resultierenden Gesamtströme in den Statorspulen 15 in eine Komponente in Richtung der d-Achse und eine Komponenten in Richtung der q-Achse aufgeteilt werden.

Zum Bereitstellen der Antriebsströme zum Antreiben des Rotors 16 weist die Steuereinheit 13 eine Treibereinheit 21 auf, die mit jeder der Statorspulen 15 verbunden ist. Zusätzlich weist die Steuereinheit 13 eine Lagedetektoreinheit 22 auf, die den über die Ansteuerleitung 19 bereitgestellten Antriebssignalen Messsignale in Form von Spannungssignalen überlagert, die ein Wechsel-Magnetfeld in Richtung der d-Achse bewirken. Das permanente Einstellen des durch die Messsignale hervorgerufenen Wechsel-Magnetfeldes in die Richtung der d-Achse erfolgt durch eine geeignete Regelung, bei der die Messsignale so geregelt werden, dass die bezüglich der Messsignale resultierende Induktivität minimal wird. Ist die resultierende Induktivität, die durch die Messsignale festgestellt wurden, minimal, so verläuft das durch die Messsignale hervorgerufene Wechsel-Magnetfeld parallel zur durch die Wicklungsachsen der Spulenwicklung definierten Richtung, d.h. im gezeigten Ausführungsbeispiel in der Hauptflussrichtung.

Es ist zwar grundsätzlich möglich, die Wicklungsachsen der Spulenwicklungen 20 auf dem Rotor 16 gegenüber der durch die Permanentmagneten 17 definierten Hauptflussrichtung zu verdrehen, dies kann jedoch dazu führen, dass das auf die Wicklungsachsen der Spulenwicklungen 20 eingestellte Wechsel-Magnetfeld das Antriebsmagnetfeld beeinflusst und somit den Betrieb des Synchronmotors 12 stört.

Die Durchführung der Lageschätzung bei einem geberlosen Motorsystem mit Hilfe einer Anisotropie der resultierenden Induktivität ist dem Prinzip nach aus dem Stand der Technik hinreichend bekannt, und es wird daher hierin nicht weiter darauf eingegangen.

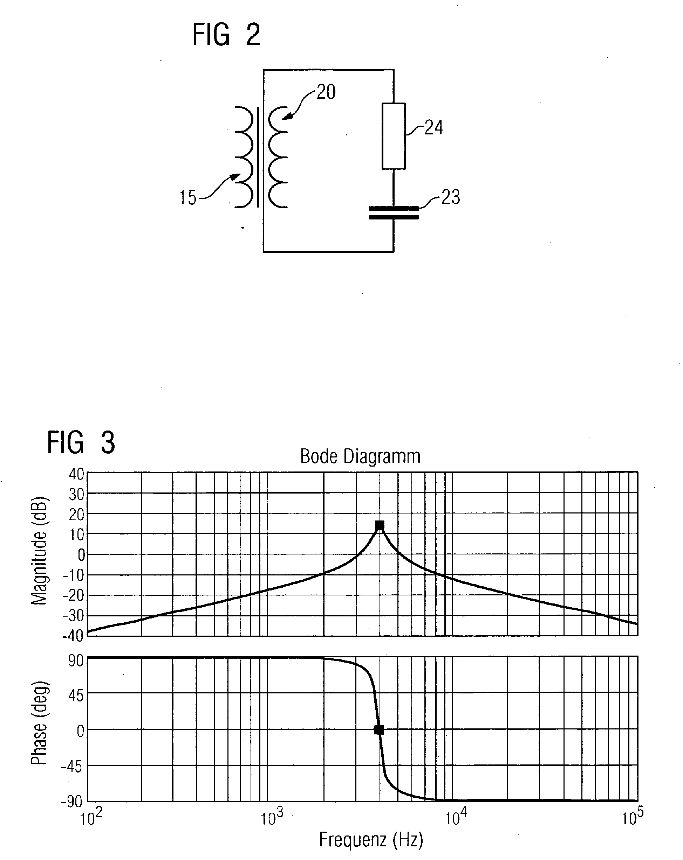

In einer weiteren Ausführungsform der vorliegenden Erfindung sind die Spulenwicklungen 20 nicht kurzgeschlossen sondern in einem Sperrkreis mit einem Kondensator 23 (Kapazität) zu einem Schwingkreis verschaltet, wie es in dem Schaltbild der FIG 2 dargestellt ist. Der Sperrkreis kann weiterhin noch einen Widerstand 24 aufweisen, der ebenfalls in Reihe zur Spulenwicklung und zum Kondensator 23 geschaltet ist. Der so gebildete Sperrkreis weist eine Eigenfrequenz $f_0$ auf:

$$f_0 = \frac{1}{2\pi\sqrt{LC}}$$

Werden die Messsignale wie oben beschrieben mit einer Frequenz an die Statorspulen 15 angelegt, die etwa der Eigenfrequenz $f_0$ entspricht, so wird, wie aus FIG 3 erkennbar, die Impedanz des Sperrkreises und somit auch die resultierende Induktivität in Richtung der d-Achse stark vergrößert, wodurch in ähnlicher Weise die rotorlageabhängige Anisotropie der resultierenden Induktivität verändert werden kann.

Im Gegensatz zur kurzgeschlossenen Spulenwicklung der ersten Ausführungsform führt die Verwendung eines Sperrkreises dazu, dass die resultierende Induktivität stark ansteigt, so dass zur Lageschätzung die Messsignale nicht bezüglich einer minimalen resultierenden Induktivität sondern bzgl. einer maximalen resultierenden Induktivität auf die Richtung der d-Achse geregelt werden muss. D.h., die Messsignale werden so an die Statorspulen 15 angelegt, dass die Komponenten des jeweiligen Messstromes, die durch die Messsignale hervorgerufen werden, möglichst maximal sind.

**Patentansprüche**

1. Synchronmotor (12) umfassend:

   - eine Anzahl von Statorspulen (15); und
   - einen Läufer (16) mit mindestens einem Permanentmagneten (17), der ein Läufer-Magnetfeld in einer Hauptflussrichtung bewirkt;
   - mindestens eine Spulenwicklung (20), die an dem Läufer angebracht ist, um durch ein mit Hilfe der Statorspulen angelegtes Wechsel-Magnetfeld in Richtung einer Wicklungsachse der Spulenwicklung ein resultierendes Magnetfeld zu induzieren, so dass eine resultierende Induktivität der Statorspulen (15) bezüglich einer Richtung der Wicklungsachse bei unterschiedlichen Lagen des Läufers (16) verschieden ist,

   **dadurch gekennzeichnet, dass** an dem Läufer (16) eine Kapazität (23) vorgesehen ist, die mit der Spulenwicklung in Reihe geschaltet ist, um einen Sperrkreis mit einer vorbestimmten Eigenfrequenz zu bilden.

2. Synchronmotor (12) nach Anspruch 1, wobei die Wicklungsachse der Spulenwicklung (20) parallel zur Hauptflussrichtung verläuft.

3. Synchronmotor (12) nach Anspruch 1 oder 2, wobei der Läufer (16) als ein Rotor ausgebildet ist, wobei der mindestens eine Permanentmagnet (17) das Läufer-Magnetfeld in radialer Richtung zu einer Rotorachse (18) bewirkt.

4. Synchronmotor (12) nach Anspruch 3, wobei sich Pole des Permanentmagneten (17) bezüglich einer Rotationsachse des Rotors (16) gegenüberliegen.

5. Synchronmotor (11) nach Anspruch 1, wobei in Reihe zu der Spulenwicklung (20) und der Kapazität (23) ein Widerstand (24) angeordnet ist.

6. Geberloses Motorsystem (11)

   - mit einem Synchronmotor (12) nach einem der Ansprüche 1 bis 5; und
   - mit einer Steuereinheit (13) zum Ansteuern der Statorspulen (15) mit einem Antriebsstrom, so dass abhängig von einer Lage des Läufers (16) ein Antriebs-Magnetfeld bewirkt wird, das in einer zur Hauptflussrichtung verschiedenen Richtung ausgebildet ist,

   wobei die Steuereinheit (13) eine Lagedetektoreinheit (22) aufweist, um mit Hilfe von an die Statorspulen (15) angelegten Messsignalen die Lage des Läufers (16) anhand einer durch die Spulenwicklung (20) bewirkten Anisotropie einer resultierenden Induktivität der Statorspulen (15) zu ermitteln.

7. Motorsystem (11) nach Anspruch 6, wobei die Lagedetektoreinheit (22) vorgesehen ist, um den Antriebsströmen Messsignale zu überlagern, die das Wechsel-Magnetfeld bewirken, und um anhand von der resultierenden Induktivität abhängigen Messströme, die durch die Messsignale hervorgerufen werden, die Lage des Läufers (16) zu ermitteln.

8. Motorsystem (11) nach Anspruch 7, wobei die Lagedetektoreinheit (22) ausgebildet ist, um die Richtung des mit Hilfe der Messsignale bewirkten Wechsel-Magnetfeldes zu regeln, so dass die resultierende Induktivität der Statorspulen (15) entweder maximal oder minimal ist, wobei die Lage des Läufers (16) abhängig von der Richtung des Wechsel-Magnetfeldes ermittelbar ist.

9. Motorsystem (11) nach einem der Ansprüche 6 bis 8, wobei die Spulenwicklung (20) so an dem Läufer (16) angeordnet ist, dass die resultierenden Induktivität der Statorspulen (15) bezüglich der Hauptflussrichtung maximal und bezüglich der Nebenflussrichtung minimal sind, wobei die Lagedetektoreinheit (22) ausgebildet ist, um das Wechsel-Magnetfeld in Richtung der Hauptflussrichtung zu regeln.

10. Verfahren zum Betreiben eines geberlosen Motorsystems (11) mit einem Synchronmotor (12) nach einem der Ansprüche 1 bis 5, wobei der Synchronmotor (12) abhängig von einer Lage des Läufers (16) betrieben wird, wobei die Lage des Läufers (16) anhand einer durch die Spulenwicklung an dem Läufer (16) bewirkten Anisotropie der resultierenden Induktivität in den Statorspulen (15) bestimmt wird, **dadurch gekennzeichnet, dass** durch den Permanentmagneten (17) des Läufers (16) die Hauptflussrichtung und eine davon verschiedene Nebenflussrichtung des magnetischen Feldes bestimmt ist, wobei die Spulenwicklung (20) mit einer Kapazität (23) in Reihe geschaltet ist, um einen Sperrkreis mit einer Eigenfrequenz zu bilden, und so an dem Läufer (16) angeordnet ist, dass die resultierende Induktivität in den Statorspulen (15) bezüglich der Hauptflussrichtung maximal und bezüglich der Nebenflussrichtung minimal ist, wobei das Wechsel-Magnetfeld mit der Eigenfrequenz des Sperrkreises erzeugt wird und in Richtung der Hauptflussrichtung geregelt wird.

## Claims

1. Synchronous motor (12) comprising:

   - a number of stator coils (15); and
   - an armature (16) with at least one permanent magnet (17), which produces an armature magnetic field in a main flux direction;
   - at least one coil winding (20) which is mounted on the armature in order to induce a resulting magnetic field by means of an alternating magnetic field applied with the help of the stator coils, in the direction of a winding axis of the coil winding, so that a resulting inductance of the stator coils (15) with respect to a direction of the winding axis is different for different positions of the armature (16), **characterized in that** a capacitor (23) is provided on the armature (16) which is connected in series with the coil winding in order to form a trap circuit with a pre-defined resonant frequency.

2. Synchronous motor (12) according to Claim 1, wherein the winding axis of the coil winding (20) runs parallel to the main flux direction.

3. Synchronous motor (12) according to Claim 1 or 2, wherein the armature (16) is designed in the form of a rotor, wherein the at least one permanent magnet (17) produces the armature magnetic field in a radial direction with respect to a rotor axis (18).

4. Synchronous motor (12) according to Claim 3, wherein poles of the permanent magnet (17) lie opposite one another with respect to an axis of rotation of the rotor (16).

5. Synchronous motor (11) according to Claim 1, wherein a resistor (24) is arranged in series with the coil winding (20) and the capacitor (23).

6. Encoderless motor system (11)

   - with a synchronous motor (12) according to one of Claims 1 to 5; and
   - having a control unit (13) for energizing the stator coils (15) with a drive current, so that a drive magnetic field, which is formed in a different direction from the main flux direction, is produced depending on a position of the armature (16),

wherein the control unit (13) has a position detector unit (22) in order to determine with the help of measuring signals applied to the stator coils (15) the position of the armature (16) based on an anisotropy of a resulting inductance of the stator coils (15) produced by the coil winding (20).

7. Motor system (11) according to Claim 6, wherein the position detector unit (22) is provided in order to superimpose measuring signals, which produce the alternating magnetic field, on the drive currents, and to determine the position of the armature (16) based on measuring currents which are dependent on the resulting inductance and which are produced by the measuring signals.

8. Motor system (11) according to Claim 7, wherein the position detector unit (22) is designed to control the direction of the alternating magnetic field produced with the help of the measuring signals, so that the resulting inductance of the stator coils (15) is either maximal or minimal, wherein the position of the armature (16) can be determined depending on the direction of the alternating magnetic field.

9. Motor system (11) according to one of Claims 6 to 8, wherein the coil winding (20) is arranged on the armature (16) so that the resulting inductances of the stator coils (15) with respect to the main flux direction are maximal and with respect to the auxiliary flux direction are minimal, the position detector unit (22) being designed to control the alternating magnetic field in the direction of the main flux direction.

10. Method for operating an encoderless motor system (11) with a synchronous motor (12) according to one of Claims 1 to 5, wherein the synchronous motor (12) is operated depending on a position of the armature (16), wherein the position of the armature (16) is determined based on an anisotropy of the resulting inductance in the stator coils (15) due to the coil winding on the armature (16), **characterized in that** the main flux direction and an auxiliary flux direction of the magnetic field which is different therefrom are determined by the permanent magnet (17) of the armature (16), the coil winding (20) being connected in series with a capacitor (23) in order to form a trap circuit with a resonant frequency, and being arranged on the armature (16) so that the resulting inductance in the stator coils (15) with respect to the main flux direction is maximal and with respect to the auxiliary flux direction is minimal, the alternating magnetic field being generated with the resonant frequency of the trap circuit and being controlled in the direction of the main flux direction.

**Revendications**

1. Moteur (12) synchrone comprenant :

   - un certain nombre de bobines (15) statoriques et
   - un induit (16) ayant au moins un aimant (17) permanent, qui donne un champ magnétique d'induit dans une direction principale de flux ;
   - au moins un enroulement (20) de bobine, qui est mis sur l'induit, pour induire un champ magnétique résultant par un champ magnétique alternatif, appliqué à l'aide des bobines statoriques, dans la direction d'un axe de l'enroulement de bobine, de sorte qu'une inductance résultante des bobines (15) statoriques, rapportée à une direction de l'axe d'enroulement, est différente pour des couches différentes de l'induit (16),

   **caractérisé en ce qu'**il est prévu sur l'induit (16) une capacité (23), qui est montée en série avec l'enroulement de bobine, pour former un circuit d'arrêt d'une fréquence propre définie à l'avance.

2. Moteur (12) synchrone suivant la revendication 1, dans lequel l'axe de l'enroulement (20) de bobine s'étend parallèlement à la direction principale de flux.

3. Moteur (12) synchrone suivant la revendication 1 ou 2, dans lequel l'induit (16) est constitué en rotor, le au moins un aimant (17) permanent donnant le champ magnétique d'induit dans une direction radiale par rapport à un axe (18) du rotor.

4. Moteur (12) synchrone suivant la revendication 3, dans lequel des pôles de l'aimant (17) permanent sont opposés, par rapport à un axe de rotation du rotor (16).

5. Moteur (12) synchrone suivant la revendication 1, dans lequel une résistance (24) est montée en série avec l'enroulement (20) de bobine et avec la capacité (23).

6. Système (11) de moteur

   - comprenant un moteur (12) synchrone suivant l'une des revendications 1 à 5 et
   - comprenant une unité (13) de commande des bobines (15) statoriques par un courant de commande, de manière à donner, en fonction d'une position de l'induit (16), un champ magnétique de commande, qui se forme dans une direction différente de la direction de flux principal,

   dans lequel l'unité (13) de commande a une unité (22) de détection de position, pour, à l'aide de signaux de mesure appliqués aux bobines (15) statoriques, déterminer la position de l'induit (16), au moyen d'une anisotropie, provoquée par l'enroulement (20) de bobine, d'une inductance résultante des bobines (15) statoriques.

7. Système (11) de moteur suivant la revendication 6, dans lequel l'unité (22) de détection de position est prévue pour superposer, aux courants de commande, des signaux de mesure, qui donnent un champ magnétique alternatif et pour, au moyen de courants de mesure, qui dépendent de l'inductance résultante et qui sont provoqués par les signaux de mesure, déterminer la position de l'induit (16).

8. Système (11) de moteur suivant la revendication 7, dans lequel l'unité (22) de détection de position est constituée pour régler la direction du champ magnétique alternatif provoqué à l'aide des signaux de mesure, de manière à ce que l'inductance résultante des bobines (15) statoriques soit maximum ou minimum, la position de l'induit (16) pouvant être déterminée en fonction de la direction du champ magnétique alternatif.

9. Système (11) de moteur suivant l'une des revendications 6 à 8, dans lequel l'enroulement (20) de bobine est mis sur l'induit (16), de manière à ce que l'inductance résultante des bobines (15) statoriques, par rapport à la direction de flux principal, soit maximum et, par rapport à la direction de flux secondaire, soit minimum, l'unité (22) de détection de position étant constituée pour régler le champ magnétique alternatif dans la direction de flux principal.

10. Procédé pour faire fonctionner un système (11) de moteur sans capteurs comprenant un moteur (12) synchrone suivant l'une des revendications 1 à 5, le moteur (12) synchrone fonctionnant en fonction d'une position de l'induit (16), la position de l'induit (16) étant déterminée à l'aide d'une anisotropie de l'inductance résultante dans les bobines (15) statoriques provoquée par l'enroulement de bobine sur l'induit (16), **caractérisé en ce que** l'on détermine, par les aimants (17) permanents de l'induit (16), la direction de flux principal et une direction de flux secondaire, qui en diffère, du champ magnétique, l'enroulement (20) de bobine étant monté en série avec une capacité (23) pour former un circuit d'arrêt ayant une fréquence propre, et étant mis sur l'induit (16), de manière à ce que l'inductance résultante dans les bobines (15) statoriques, rapportée à la direction de flux principal, soit maximum et, rapportée à la direction de flux secondaire, soit minimum, le champ magnétique alternatif étant produit à la fréquence propre du circuit d'arrêt et étant réglé dans la direction de flux principal.

# FIG 1

q-Achse

d-Achse

Lq

ω

# FIG 2

# FIG 3

Bode Diagramm

Frequenz (Hz)

**IN DER BESCHREIBUNG AUFGEFÜHRTE DOKUMENTE**

**In der Beschreibung aufgeführte Patentdokumente**

- EP 0457389 A1
- DE 10156243 A1